Europäisches Patentamt

European Patent Office

Office européen des brevets

(19)

(11) Numéro de publication: **0 319 413**
**A1**

(12)

# DEMANDE DE BREVET EUROPEEN

(21) Numéro de dépôt: **88403025.5**

(22) Date de dépôt: **01.12.88**

(51) Int. Cl.4: **G 01 V 11/00**
**G 01 V 1/34**

(30) Priorité: **01.12.87 FR 8716652**

(43) Date de publication de la demande:
**07.06.89 Bulletin 89/23**

(84) Etats contractants désignés:
**AT BE CH DE ES FR GB IT LI LU NL SE**

(71) Demandeur: **SOCIETE NATIONALE ELF AQUITAINE (PRODUCTION)**
**Tour Elf 2, Place de la Coupole La Défense 6**
**F-92400 Courbevoie (FR)**

(72) Inventeur: **Portalis, Jean-Christophe**
**17, Avenue de Verdun**
**F-64140 Billere (FR)**

(74) Mandataire: **Boillot, Marc**
**SOCIETE NATIONALE ELF AQUITAINE Division**
**Propriété Industrielle Tour Elf**
**F-92078 Paris la Défense Cédex 45 (FR)**

(54) **Procédé d'élaboration d'une coupe lithologique.**

(57) Procédé de représentation graphique de la lithologie appliquée aux coupes de terrain.

Dans un tel procédé, pour chaque échantillon, on affiche le type de roche principale auquel correspond un motif caractéristique (Fig.1) dont la répétition constitue un réseau régulier (Fig.2) de maillons figuratif de celle-ci et ensuite les types de roches secondaires (Fig. 34 à 45) et les matériaux accessoires éventuels (Fig. 46 à 67) auxquels correspondent des figures aptes à être situées dans lesdits maillons.

De telles coupes lithologiques tout en apportant le maximum d'informations sur la sédimentation attirent l'attention du prospecteur sur les problèmes de gisement.

FIG.76

EP 0 319 413 A1

### Description

### PROCEDE D'ELABORATION D'UNE COUPE LITHOLOGIQUE

La présente invention concerne un procédé de représentation graphique de la lithologie appliqué à l'élaboration des divers documents où sont reportées les descriptions des échantillons de roches faites par le géologue, notamment des coupes de puits.

Sur une coupe de puits, dite coupe fondamentale, le géologue de sonde porte, de façon codée, l'essentiel de sa description des déblais recueillis à des espacements réguliers au cours du forage.

Les figures lithologiques utilisés par les géologues de sonde représentent les éléments constitutifs de la roche, la nature de roche principale, les natures de roches secondaires et les éléments accessoires, minéraux, fossiles ou autres, qui peuvent être observés sur les éléments de déblais de forage après lavage.

Les symboles graphiques sont un moyen synthétique de représentation, destiné à faire appréhender au premier coup d'oeil les principaux éléments constitutifs d'une roche.

Il est tout à fait nécessaire qu'un procédé de représentation graphique faisant appel à des moyens de transcription automatiques permette aux géologues de continuer à manipuler le graphique, comme cela est réalisé jusque là en dessinant des coupes lithologiques de puits, des planches de corrélation, des planches géologiques, des coupes réduites, etc... avec un langage commun et les moyens déjà éprouvés pour attirer l'attention sur certaines particularités qui ont un sens d'une part pour le prospecteur et d'autre part pour l'ingénieur gisement.

La connaissance des roches ou lithologie est abordée par trois approches différentes.

L'étude des diagraphies différées enregistrant les différents paramètres que sont la résistivité électrique, la vitesse de propagation des différents ébranlements mécaniques, le rayonnement nucléaire naturel ou provoqué, conduit à une définition quantitative de certains composants dans des tranches de profondeur et une appréciation du litage.

Les analyses de laboratoire sur les déblais de forage conduisent à la définition pour chaque échantillon des composants chimiques et de leurs pourcentages.

La description après observation à l'aide de moyens de grossissement tels que la lunette binoculaire, fournit les éléments de connaissance de la nature principale de la roche, des constituants de nature secondaire et des éléments accessoires.

C'est cette dernière voie qui est traditionnellement utilisée pour dresser sur le chantier de forage la coupe du puits au jour le jour. Les diagraphies et des analyses de laboratoire sont ultérieurement associées à la coupe de chantier et la combinaison de ces trois moyens conduit à la constitution de la coupe fondamentale du sondage.

La représentation de la lithologie à l'aide de moyens codés par affichage des différents éléments de roche principale, secondaire et d'éléments annexes est envisageable aussi bien au moment de la description des déblais sur le chantier de forage qu'à celui de la confection de la coupe fondamentale.

Cette représentation de la lithologie doit, avec un catalogue de figures nécessairement limité, présenter une grande richesse de représentation, afin de garder le caractère des documents obtenus jusqu'à ce jour par composition manuelle et même leur apporter des perfectionnements dans la manifestation des proportions des constituants et l'importance des éléments accessoires ou mieux leur fréquence.

Cet objectif a été atteint par l'adoption de principe fondamental de l'insertion des figurés secondaires et/ou accessoires dans la trame caractéristique de la nature principale de la roche.

Dans un procédé d'élaboration d'une coupe lithologique, selon l'invention, après avoir constitué un catalogue donnant pour chaque type de roche principale un motif graphique dont la répétition horizontale et verticale constitue un réseau régulier de maillons et pour chaque type de roche secondaire et pour chaque matériau accessoire une figure apte à être située dans un maillon précité, on affiche, pour chaque échantillon, le type de la roche principale, ensuite un ou plusieurs types de roches secondaires et enfin un ou plusieurs matériaux ou éléments accessoires.

Selon un mode préférentiel de réalisation on affiche avec chaque type de roche secondaire une appréciation de proportion et avec chaque matériau ou élément accessoire une indication de fréquence, les appréciations de proportion comme les indications de fréquence comportant au moins deux degrés et de façon pratique trois degrés d'évaluation.

Lorsque cela est possible, c'est-à-dire lorsque ces éléments sont accessibles à l'observation visuelle sur éléments de déblais, on affiche la présence de vacuoles, fissures, fractures et éventuellement une appréciation de la porosité de matrice.

D'une façon générale, la figure correspondant à un type de roche secondaire ou à un matériau accessoire est apte à être situé au centre d'un des maillons précités.

Dans les différents modes de réalisation, le motif graphique de chaque type de roche principale est choisi tel que, lorsque l'on affiche ledit type de roche principale, une répétition horizontale et verticale dudit motif constitue un réseau régulier de maillons comportant au moins un niveau supérieur d'au moins trois maillons et un niveau inférieur d'au moins deux maillons.

Suivant un mode préférentiel, le motif graphique de chaque type de roche principale est choisi tel que, lorsque l'on affiche ledit type de roche principale, une répétition horizontale et verticale dudit motif constitue un réseau régulier de maillons comportant un niveau supérieur de trois maillons et un niveau inférieur de deux maillons. Suivant ce même mode préférentiel, on affiche selon les cas :
- une nature secondaire de roche en faible quantité, ce qui entraîne inscription de la figure correspondante dans le maillon supérieur gauche,
- une nature secondaire de roche en moyenne quantité, ce qui entraîne inscription de la figure correspondante dans les maillons supérieurs gauche et droit,
- une nature secondaire de roche en forte quantité, ce qui entraîne inscription de la figure correspondante dans tous les maillons,
- une nature tertiaire de roche, ce qui entraîne inscription de la figure correspondante dans le maillon médian supérieur, s'il y a lieu à la place d'une éventuelle figure de nature secondaire de roche,
- un premier élément accessoire, ce qui entraîne inscription de la figure correspondante dans le maillon inférieur gauche, s'il y a lieu à la place d'une éventuelle figure de nature secondaire de roche,
- un second élément accessoire, ce qui entraîne inscription de la figure correspondante dans le maillon inférieur droit, s'il y a lieu à la place d'une éventuelle figure de nature secondaire de roche.

D'autres caractéristiques et avantages ressortiront mieux à la lecture de la description d'un mode préféré de l'invention, donnée à titre indicatif mais non limitatif ainsi que des dessins annexés.

Planche I - Nature principale de roche

Fig. 1 - Motif calcaire
Fig. 2 - Calcaire (Réseau de maillons)
Fig. 3 - Motif marne
Fig. 4 - Marne (Réseau de maillons)
Fig. 5 - Motif dolomie
Fig. 6 - Dolomie (Réseau de maillons)
Fig. 7 - Motif anhydrite
Fig. 8 - Anhydrite (Réseau de maillons)
Fig. 9 - Motif sel
Fig. 10 - Sel (Réseau de maillons)

Planche II - Nature principale de la roche (Réseau de maillons)

Fig. 11 - Argile
Fig. 12 - Craie
Fig. 13 - Gypse
Fig. 14 - Sylvinite
Fig. 15 - Phosphate
Fig. 16 - Radiolarite
Fig. 17 - Quartzite
Fig. 18 - Roche volcanique
Fig. 19 - Roche plutonique
Fig. 20 - Roche métamorphique
Fig. 21 - Silt
Fig. 22 - Sable fin à moyen

Planche III - Nature principale de roche (Réseau de maillons)

Fig. 23 - Sable grossier à très grossier
Fig. 24 - Grès fin à moyen
Fig. 25 - Grès grossier, très grossier

Fig. 26 - Graviers, galets
Fig. 27 - Lumachelle
Fig. 28 - Falun
Fig. 29 - Poudingue monogénique
Fig. 30 - Poudingue polygénique
Fig. 31 - Brèche monogénique
Fig. 32 - Brèche polygénique
Fig. 33 - Charbon

Planche IV - Nature secondaire de la roche (Figure)

Fig. 34 - Anhydrite
Fig. 35 - Gypse
Fig. 36 - Sylvinite
Fig. 37 - Phosphore
Fig. 38 - Carbonate
Fig. 39 - Dolomite
Fig. 40 - Silice
Fig. 41 - Sel
Fig. 42 - Sable (fin)
Fig. 43 - Sable (moyen à grossier)
Fig. 44 - Gravier
Fig. 45 - Argile

Planche V - Eléments accessoires minéraux (Figure)

Fig. 46 - Dolomie
Fig. 47 - Sidérite
Fig. 48 - Feldspath
Fig. 49 - Fer
Fig. 50 - Pyrite
Fig. 51 - Calcite
Fig. 52 - Mica
Fig; 53 - Glauconie

Planche VI - Eléments accessoires d'origine fossile (Figure)

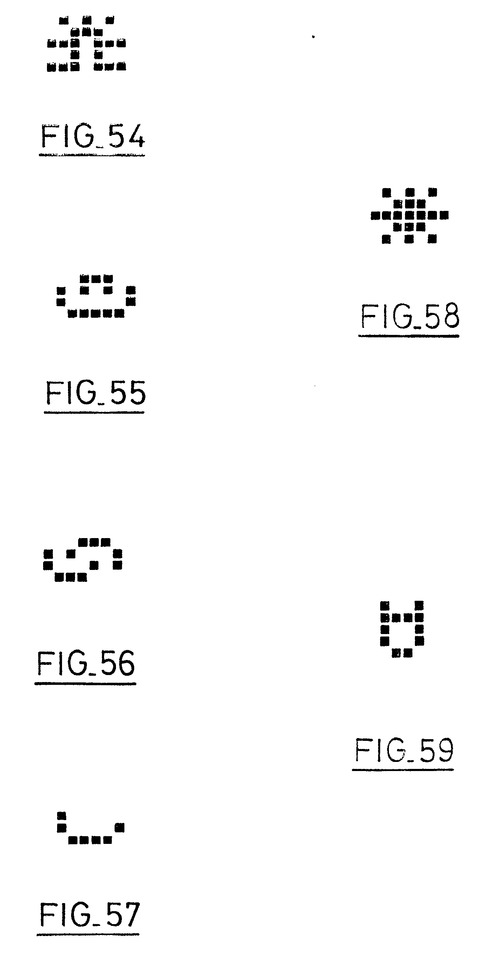

Fig. 54 - Echinides
Fig. 55 - Nummulites
Fig. 56 - Coquilles
Fig. 57 - Débris coquillers
Fig. 58 - Coraux
Fig. 59 - Belemnites

Planche VII - Eléments accessoires divers (Figure)

Fig. 60 - Bitume
Fig. 61 - Silex
Fig. 62 - Oolithe
Fig. 63 - Pisolithe
Fig. 64 - Vacuoles
Fig. 65 - Fissures
Fig. 66 - Fractures
Fig. 67 - Porosité de matrices.

Planche VIII - Exemples de lithologie

Fig. 68 - Calcaire peu dolomitique
Fig. 69 - Calcaire moyennement dolomitique
Fig. 70 - Calcaire très dolomitique
Fig. 71 - Calcaire moyennement dolomitique et phosphoreux

Planche IX - Exemples de lithologie

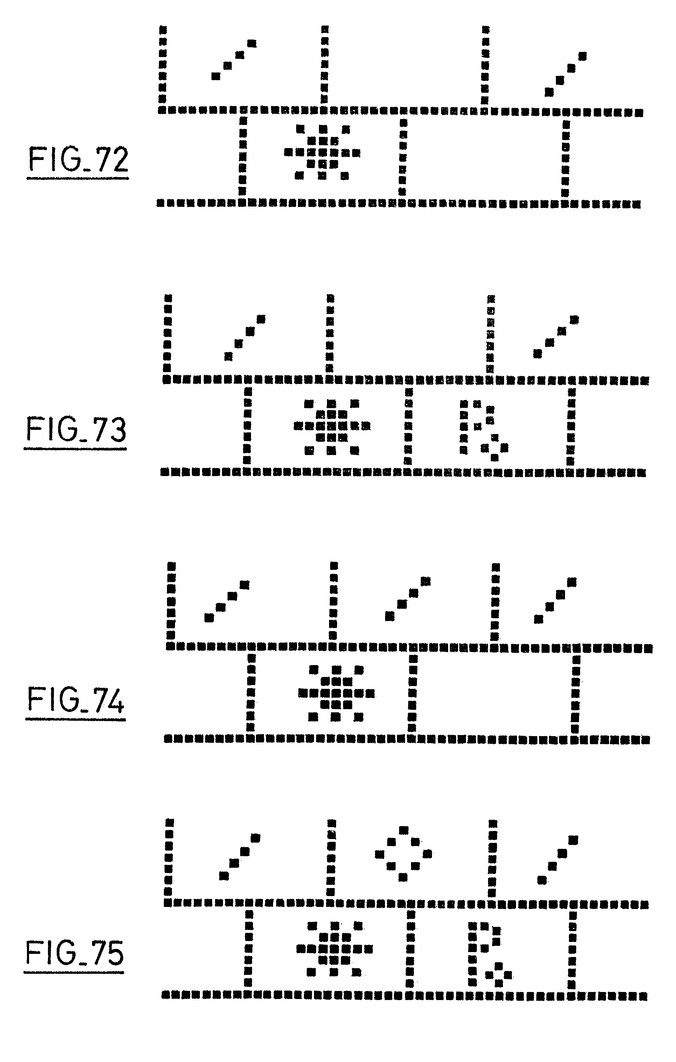

Fig. 72 - Calcaire moyennement dolomitique avec coraux

Fig. 73 - Calcaire moyennement dolomitique avec coraux. Porosité de matrice

Fig. 74 - Calcaire très dolomitique avec coraux

Fig. 75 - Calcaire moyennement dolomitique, phosphoreux. Coraux. Porosité de matrice.

Planche X - Exemples de lithologie

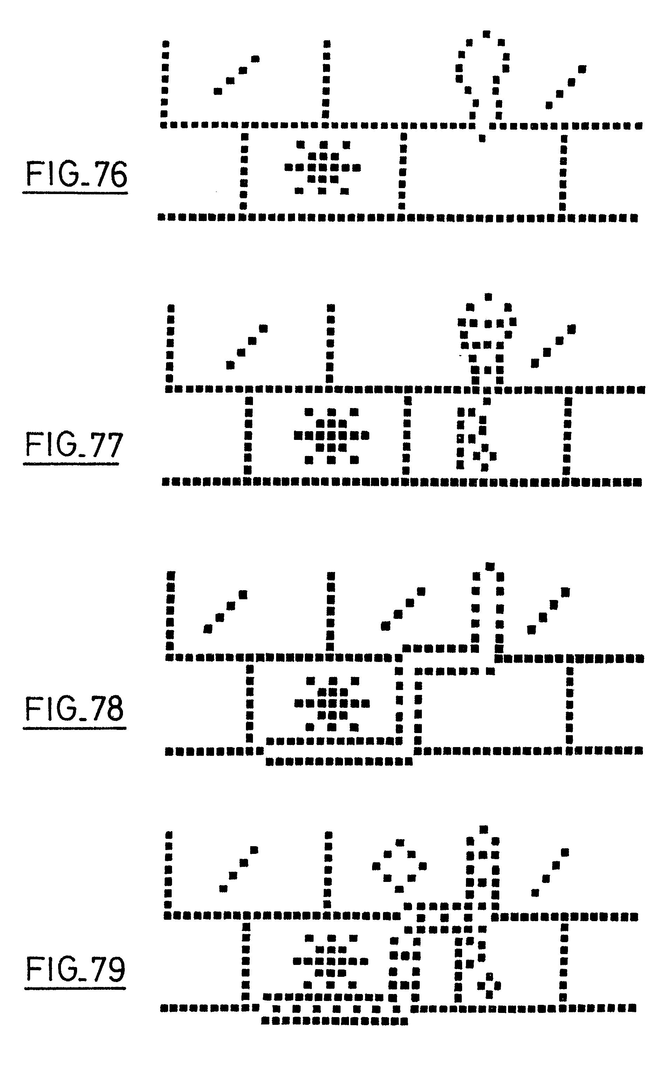

Fig. 76 - Calcaire moyennement dolomitique avec coraux, présence de vacuoles

Fig. 77 - Calcaire moyennement dolomitique avec coraux, vacuoles fermées ou cimentées

Fig. 78 - Calcaire très dolomitique avec coraux, présence de fissures

Fig. 79 - Calcaire très dolomitique,phosphoreux avec coraux, présence de fissure fermée ou cimentée.

Planche XI

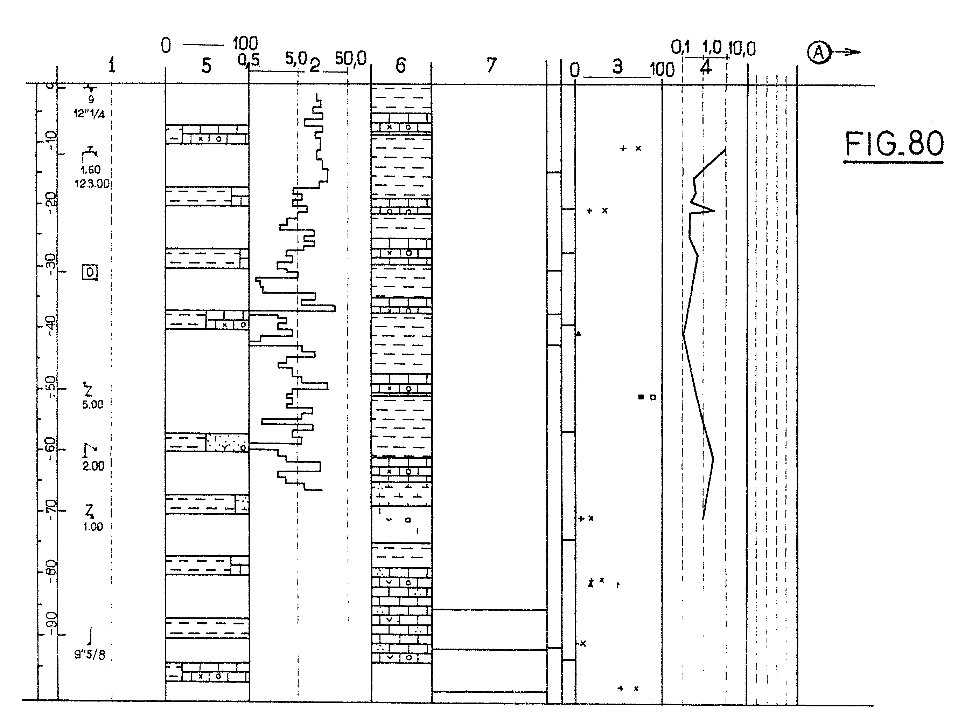

Fig. 80 - Exemple de log géologique de chantier.

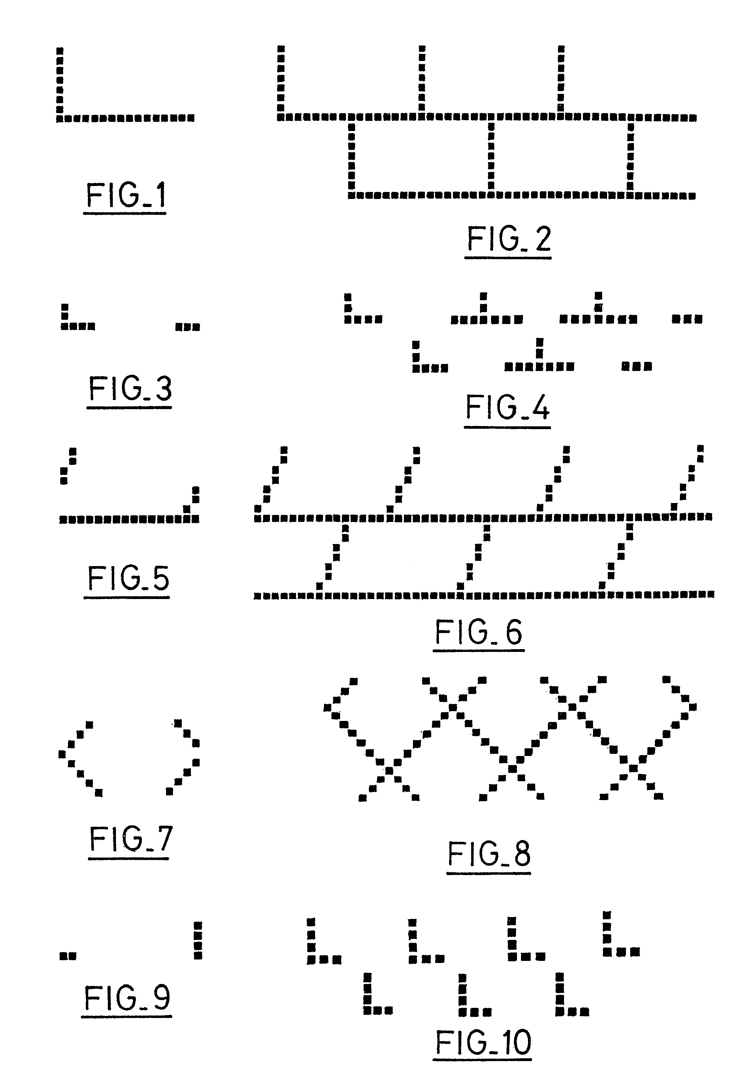

En se référant à la planche I on trouve, en colonne de gauche, le motif caractéristique de la nature principale de la roche : calcaire (Fig. 2), marne (Fig. 3), dolomie (Fig. 5), anhydrite (Fig. 7) et sel (Fig. 9) et en colonne de droite une répétition régulière horizontale et verticale de chacun de ces motifs, respectivement avec chacune des figures 2,4,6,8 et 10.

Sur chacune de ces figures la répétition du motif de la roche principale constitue un réseau de maillons avec un niveau supérieur de trois maillons et un niveau inférieur de deux maillons : cette disposition est obtenue par le décalage latéral d'un demi maillon pour le niveau inférieur.

Les planches II et III donnent un catalogue de représentation de différents types de roche principale.

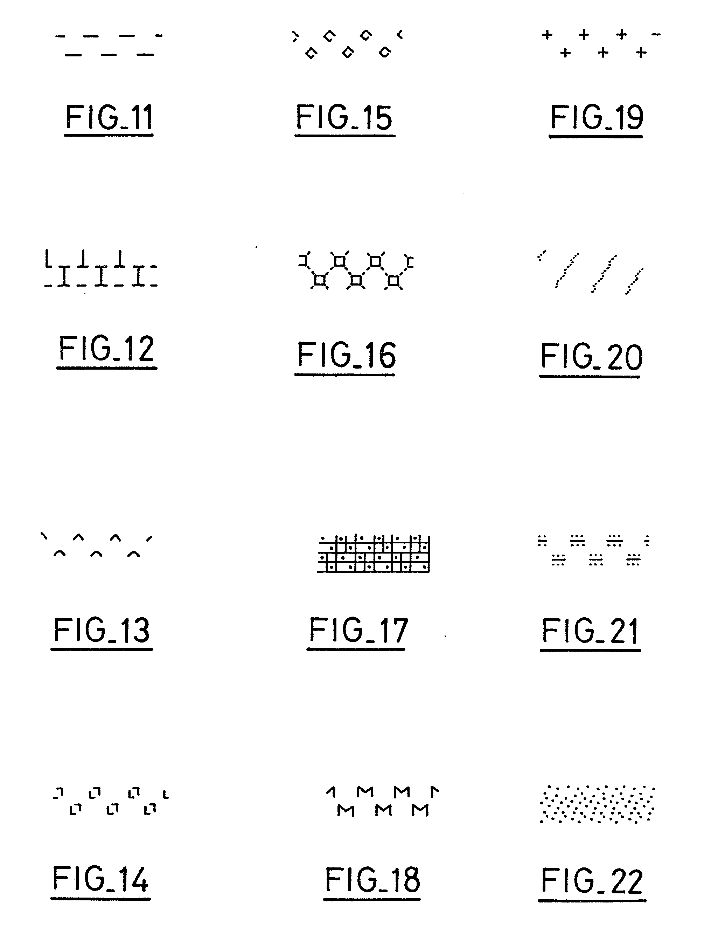

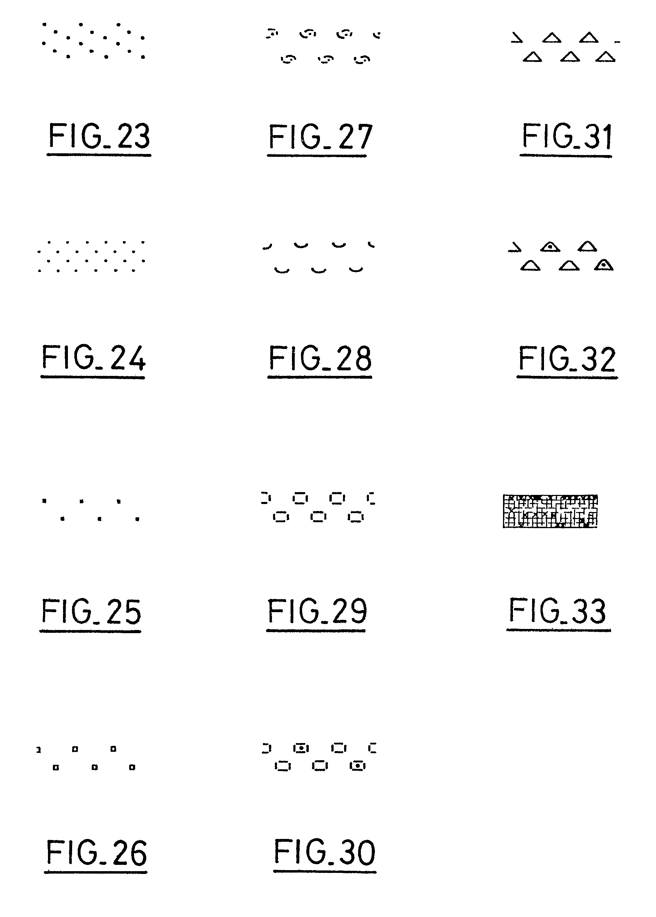

Pour les figures 11 à 22 de la planche II et les figures 23 à 33 de la planche III, il s'agit de réseaux réguliers de motifs caractéristiques chacun d'un type de roche, chaque réseau constituant un ensemble de maillons dont trois au niveau supérieur et deux au niveau inférieur, comme cela a été montré à l'aide des cinq exemples de la planche I.

Bien que ce catalogue de 27 types de roches (pl. I,II et III) ne soit pas exhaustif, il fournit de larges possibilités de description pour le géologue de sonde ou de terrain.

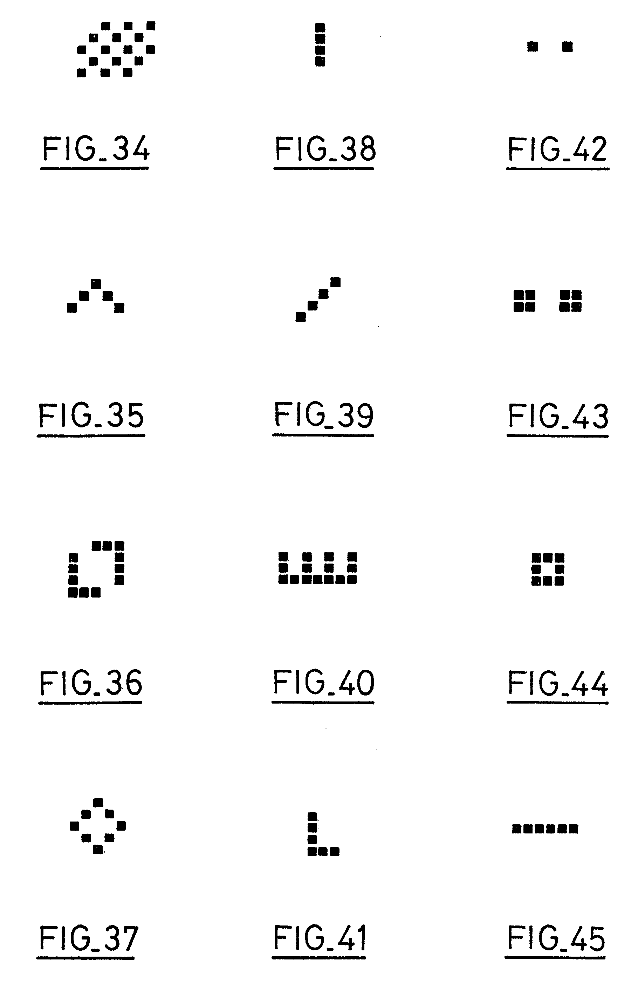

La planche IV donne les figures des natures secondaires de la roche (Fig. 34 à 45).

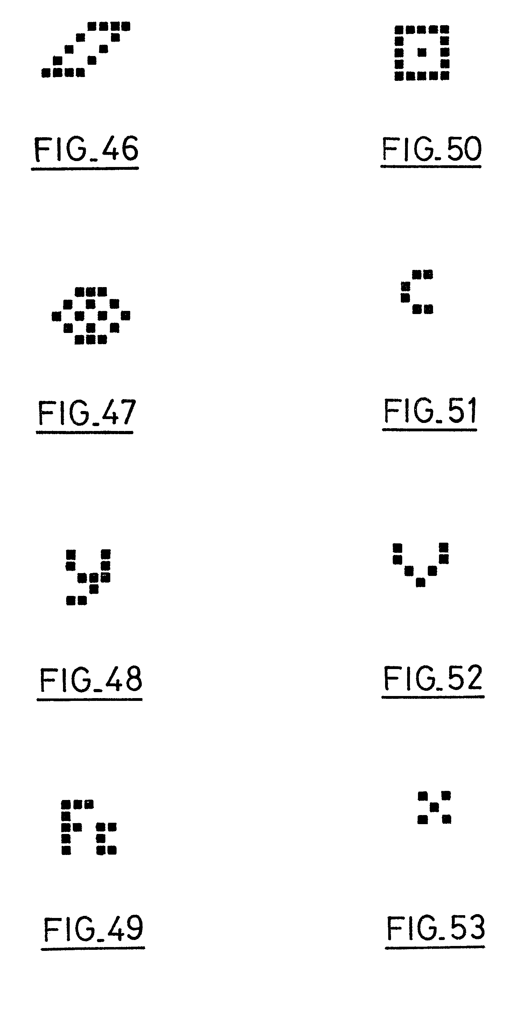

Les planches V et VI donnent respectivement les figures d'éléments accessoires, minéraux pour la planche V (Fig. 46 à 53) d'origine fossile pour la planche VI (Fif. 54 à 59).

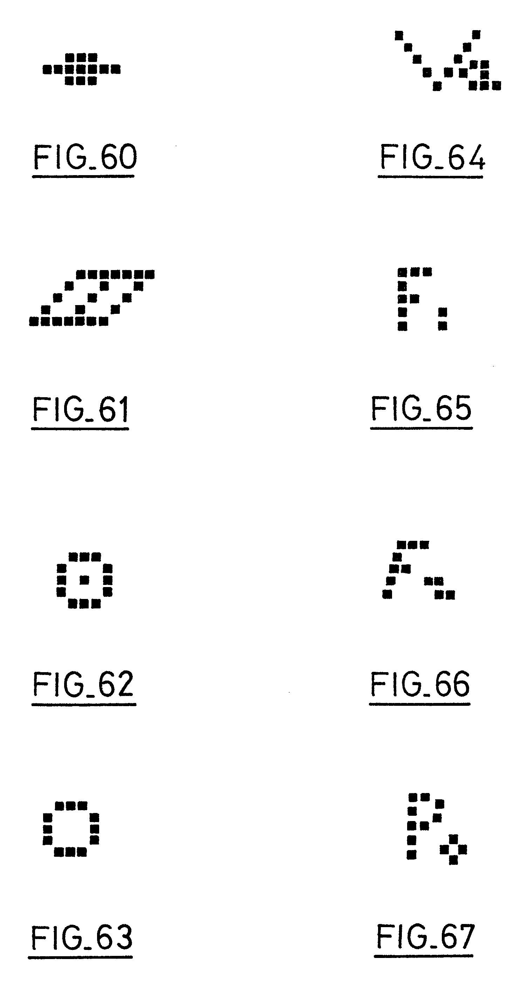

La planche VII rassemble des formes particulières de dépôts minéraux ou formes de sédimentation au nombre de quatre (Fig. 60 à 63) et quelques caractéristiques de réservoir directement visibles sur les carottes, telles que fissures ou fractures, ou indirectement détectées par l'observation de calcite caractéristique dans les déblais de forage ou encore vacuoles ou porosité de matrice visible sur certains de ces éléments de déblais et sur les carottes (Fig. 64 à 67).

La planche VIII donne des exemples de lithologie pour des roches où une nature secondaire et éventuellement tertiaire a été observée.

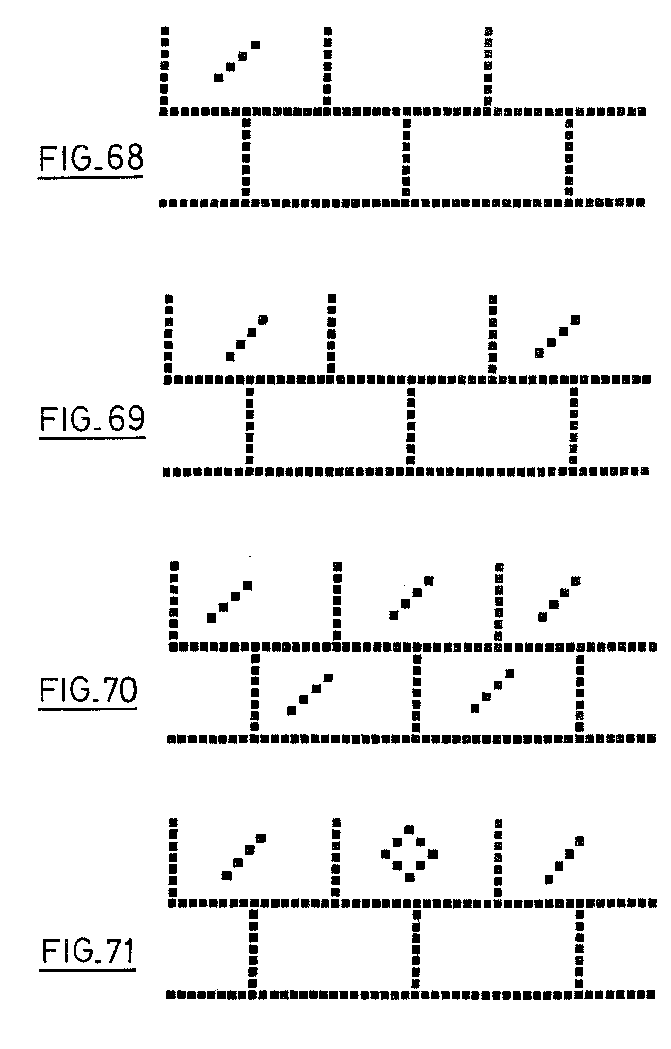

Pour une faible proportion d'une nature secondaire de roche, la figure correspondante s'inscrit dans le maillon supérieur gauche (Fig. 68). Pour une moyenne proportion de la même nature secondaire de roche, la figure correspondante s'inscrit dans les maillons supérieurs gauche et droit Fig. 69).

Pour une forte proportion de la même nature secondaire de roche, la figure correspondante s'inscrit dans tous les maillons (Fig. 70).

Si, à côté de la nature secondaire de roche déjà mentionnée et représentée, il est observé la présence, en moindre proportion, d'une autre nature secondaire de roche, celle-ci sera qualifiée de nature tertiaire de roche et sa figure caractéristique, extrait du catalogue des natures secondaires de roche, sera inscrit dans le maillon médian supérieur (Fig. 71).

La planche IX donne des exemples de lithologie pour des roches plus ou moins dolomitiques avec présence d'un élément accessoire constitué par des coraux et éventuellement une indication de porosité de matrice telle qu'elle peut être observée sur des fragments de déblais.

Un premier élément accessoire, lorsqu'il est pointé ou affiché, voit sa figure caractéristique inscrite dans le maillon inférieur gauche.

Un second élément accessoire, lorsqu'il est pointé ou affiché, voit sa figure caractéristique inscrite dans le maillon inférieur droit.

L'inscription de la figure caractéristique d'un premier ou d'un second élément accessoire dans le maillon inférieur gauche ou droit s'effectue, s'il y a lieu, à la place d'une éventuelle figure de nature secondaire, à laquelle elle se substitue.

La planche X donne des exemples de lithologie pour des roches dolomitiques avec présence de coraux où sont représentées des vacuoles ou des fractures, vides ou cimentées, telles qu'elles sont observables sur des carottes.

La planche XI donne un exemple de log géologique de chantier.

Sur un tel document, on trouve d'abord des informations fournies par les services techniques de contrôle de forage, à savoir :

1. les informations forage, notamment les outils et paramètres de forage, les paramètres de la boue, les mesures de déviation

2. la vitesse d'avancement de l'outil de forage

3. la calcimétrie des déblais

4. Les indices de gaz : le gaz total

On trouve ensuite deux colonnes utilisant le procédé selon la présente innovation tel qu'il vient d'être décrit.

5. La représentation des déblais de forage Les débris provenant de la destruction des roches successivement traversées par l'outil de forage sont remontés par la boue. Au cours de cette remontée, qui peut se faire sur plusieurs milliers de mètres, ces débris sont inévitablement mélangés les uns aux autres. Ces débris, à intervalles réguliers, sont ramassés en l'état, puis attribués grâce à un calcul de temps de remontée relativement simple et approximatif, à une profondeur. Cet échantillon est appelé déblai. Ce déblai est observé, les différentes roches pouvant le composer sont décrites. Le résultat de cette observation (les différentes roches pouvant composer le déblai) est reporté sous forme graphique, à la profondeur attribuée, dans la colonne déblai du log à l'aide du procédé revendiqué.

L'exemple donné correspond à une série sédimentaire consistant en alternance de niveaux tendres tels qu'argile et de niveaux indurés tels que calcaire ou grès.

A chaque échantillon sont représentées les natures lithologiques de chacune des deux composantes, à gauche la roche tendre, à droite la roche indurée, la proportion entre les deux correspondant à l'observation.

6. La coupe lithologique. Le stade suivant consiste, en s'appuyant sur la précédente observation et sur des informations annexes, à reconstituer graphiquement, banc par banc, en utilisant le même procédé revendiqué, la succession des roches traversées par le forage.

Lorsqu'un banc de roche est d'épaisseur importante, il devient possible de répéter plusieurs fois le réseau de maillons avec deux niveaux, tout en gardant à cette représentation son caractère conventionnel.

Une latitude est alors offerte de rendre compte de la fréquence des éléments accessoires : si la fréquence est faible, le figuré de l'élément accessoire sera répété dans le 4è réseau sous-jacent et si cette fréquence est forte dans le 2è réseau sous-jacent, tel est le cas de la figure pour le banc (A).

7. Colonne où prend place une description libre des séries traversées pouvant préciser des éléments non pris en compte par le figuré lithologique couleur, compacité, texture de la roche, et des informations sur l'arrangement général des bancs tel qu'il peut être apprécié par le géologue : alternances régulières, irrégulières, minces passées ...

De nombreuses variantes peuvent être imaginées pour l'application du procédé d'élaboration des coupes lithologiques, tel qu'il vient d'être décrit, avec, pour finalité, en même temps la meilleure visualisation des ensembles sédimentaires et des bancs qui les composent et l'indication des particularités tant sédimentaire que de gisement.

**Revendications**

1 - Procédé d'élaboration d'une coupe lithologique, pour la localisation de matières minérales en vue de leur exploitation, dans lequel après avoir constitué un catalogue donnant pour chaque type de roche principale un motif graphique dont la répétition horizontale et verticale constitue un réseau régulier de maillons et, pour chaque type de roche secondaire et pour chaque matériau accessoire, une figure apte à être située dans un maillon précité, on affiche pour chacun des échantillons, le type de la roche principale, un ou plusieurs types de roches secondaires et enfin un ou plusieurs matériaux accessoires.

2 - Procédé selon la revendication I dans lequel on affiche avec chaque type de roche secondaire une appréciation de proportion et avec chaque matériau accessoire une indication de fréquence.

3 - Procédé selon la revendication 2 dans lequel les appréciations de proportion comme les indications de fréquence comportent au moins deux degrés d'évaluation.

4 - Procédé selon la revendication 1 dans lequel on affiche ensuite la présence de fractures, de fissures et éventuellement de porosité de matrice.

5 - Procédé selon la revendication I dans lequel la figure correspondant à un type de roche secondaire ou à un matériau accessoire est apte à être situé au centre d'un maillon précité.

6 - Procédé selon la revendication 1 dans lequel le motif graphique de chaque type de roche principale est choisi tel que, lorsque l'on affiche ledit type de roche principale, une répétition horizontale et verticale dudit motif constitue un réseau régulier de maillons comportant au moins un niveau supérieur d'au moins trois maillons et un niveau inférieur d'au moins deux maillons.

7 - Procédé selon la revendication 1 dans lequel le motif graphique de chaque type de roche principale est choisi tel que, lorsque l'on affiche ledit type de roche principale, une répétition horizontale et verticale dudit motif constitue un réseau régulier de maillons comportant un niveau supérieur de trois maillons et un niveau inférieur de deux maillons.

8 - Procédé selon la revendication 7 dans lequel on affiche selon les cas :
- une nature secondaire de roche en faible proportion, ce qui entraîne inscription de la figure correspondante dans le maillon supérieur gauche,
- une nature secondaire de roche en moyenne proportion, ce qui entraîne inscription de la figure correspondante dans les maillons supérieurs gauche et droit,
- une nature secondaire de roche en forte proportion, ce qui entraîne inscription de la figure correspondante dans tous les maillons supérieurs,
- une nature tertiaire de roche, ce qui entraîne inscription de la figure correspondante dans le maillon médian supérieur, s'il y a lieu à la place d'une éventuelle figure de nature secondaire,

- un premier élément accessoire, ce qui entraîne inscription de la figure correspondante dans le maillon inférieur gauche, s'il y a lieu à la place d'une éventuelle figure de nature secondaire,

- un second élément accessoire, ce qui entraîne inscription du motif correspondant dans le maillon inférieur droit, s'il y a lieu à la place d'une éventuelle figure de nature secondaire.

EP 0 319 413 A1

FIG_1

FIG_2

FIG_3

FIG_4

FIG_5

FIG_6

FIG_7

FIG_8

FIG_9

FIG_10

FIG.11

FIG.15

FIG.19

FIG.12

FIG.16

FIG.20

FIG.13

FIG.17

FIG.21

FIG.14

FIG.18

FIG.22

FIG. 23

FIG. 24

FIG. 25

FIG. 26

FIG. 27

FIG. 28

FIG. 29

FIG. 30

FIG. 31

FIG. 32

FIG. 33

FIG_34

FIG_35

FIG_36

FIG_37

FIG_38

FIG_39

FIG_40

FIG_41

FIG_42

FIG_43

FIG_44

FIG_45

EP 0 319 413 A1

FIG.46

FIG.50

FIG.47

FIG.51

FIG.48

FIG.52

FIG.49

FIG.53

EP 0 319 413 A1

FIG_54

FIG_58

FIG_55

FIG_56

FIG_59

FIG_57

FIG_60

FIG_64

FIG_61

FIG_65

FIG_62

FIG_66

FIG_63

FIG_67

FIG. 68

FIG. 69

FIG. 70

FIG. 71

FIG_72

FIG_73

FIG_74

FIG_75

FIG_76

FIG_77

FIG_78

FIG_79

FIG.80

EP 0 319 413 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | GB-A-2 165 973 (TOTAL) <br> * Page 2, ligne 122 - page 3, ligne 21; figure 6 * <br> --- | 1 | G 01 V  11/00 <br> G 01 V   1/34 |
| A | FR-A-2 520 882 (SCHLUMBERGER) <br> * Figure 2 * <br> --- | 1 | |
| A | US-A-3 147 458 (WAGNER) <br> * Colonne 3, lignes 13-42; figure 2 * <br> ----- | 1 | |

DOMAINES TECHNIQUES
RECHERCHES (Int. Cl.4)

G 01 V

Le présent rapport a été établi pour toutes les revendications

| Lieu de la recherche | Date d'achèvement de la recherche | Examinateur |
|---|---|---|
| LA HAYE | 03-03-1989 | ANDERSON A.TH. |

FPO FORM 1503 03.82 (P0402)